(19) Europäisches Patentamt
European Patent Office
Office européen des brevets

(11) **EP 1 841 989 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(21) Anmeldenummer: **05807483.2**

(22) Anmeldetag: **07.11.2005**

(51) Int Cl.:
*F16H 61/14* (2006.01)    *F16H 63/50* (2006.01)
*B60W 10/04* (2006.01)

(86) Internationale Anmeldenummer:
**PCT/EP2005/011873**

(87) Internationale Veröffentlichungsnummer:
**WO 2006/079373 (03.08.2006 Gazette 2006/31)**

(54) **VERFAHREN ZUR STEUERUNG EINES GETRIEBES IN EINEM ANTRIEBSSTRANG EINES FAHRZEUGES, INSBESONDERE DES WECHSELS ZWISCHEN ZUMINDEST TEILWEISE HYDRODYNAMISCHER UND MECHANISCHER LEISTUNGSÜBERTRAGUNG UND STEUERVORRICHTUNG**

METHOD FOR CONTROLLING A GEARBOX IN THE DRIVE TRAIN OF A VEHICLE, IN PARTICULAR DURING SWITCHING FROM AN AT LEAST PARTIALLY HYDRODYNAMIC POWER TRANSMISSION TO A MECHANICAL POWER TRANSMISSION

PROCEDE ET DISPOSITIF POUR COMMANDER UNE BOITE DE VITESSES DANS UNE CHAINE CINEMATIQUE D'UN VEHICULE, NOTAMMENT LE PASSAGE D'UNE TRANSMISSION DE PUISSANCE AU MOINS PARTIELLEMENT HYDRODYNAMIQUE A UNE TRANSMISSION DE PUISSANCE MECANIQUE

(84) Benannte Vertragsstaaten:
**DE**

(30) Priorität: **28.01.2005 DE 102005004227**

(43) Veröffentlichungstag der Anmeldung:
**10.10.2007 Patentblatt 2007/41**

(73) Patentinhaber: **Voith Turbo GmbH & Co. KG
89522 Heidenheim (DE)**

(72) Erfinder:
• **HUDELMAIER, Wolfgang
73563 Mögglingen (DE)**
• **BURR, Ulrich
89073 Ulm (DE)**
• **SCHÖNHAAR, Thomas
89551 Königsbronn (DE)**

(74) Vertreter: **Dr. Weitzel & Partner
Friedenstrasse 10
89522 Heidenheim (DE)**

(56) Entgegenhaltungen:
EP-A- 1 498 297          FR-A- 2 701 301
US-A- 5 637 052          US-B1- 6 454 676

• JANDASEK, V.J.: "Design Practices Passenger Car Automatic Transmissions" 1973, SOCIETY OF AUTOMOTIVE ENGINEERS , WARRENDALE , XP002366173 Design of Single-Stage, Three-Element Torque Converter Seite 201 - Seite 226; Verbindung CHAP. 21

**Beschreibung**

Die Erfindung betrifft ein Verfahren zur Steuerung eines Getriebes in einem Antriebsstrang eines Fahrzeuges, im Einzelnen mit den Merkmalen aus dem Oberbegriff des Anspruches 1.

In Antriebssträngen, insbesondere Antriebssträngen mit Automatgetrieben, welche eine hydrodynamische Komponente in Leistungsverzweigung oder in Reihe in Kombination mit mindestens einer nachgeschalteten mechanischen Fahrstufe umfassen, werden Schaltprogramme mit festen Umschaltpunkten oder einfache beschleunigungsabhängige Schaltprogramme verwendet. Bei ersterem erfolgt die Umschaltung normalerweise im oberen Drehzahlbereich der Antriebsmaschine. Dadurch wird die größere Motorleistung zur besseren Fahrzeugbeschleunigung ausgenutzt, was im ansteigenden Gelände oder bei großer Personenbesetzung eines Fahrzeuge, insbesondere Busses, erforderlich sein kann. Allerdings ergibt sich dabei auch ein höherer Kraftstoffverbrauch, weil die Antriebsmaschine bei höherer Drehzahl in einem ungünstigeren Kennfeldbereich arbeitet. Zur Lösung dieser Problematik werden beispielsweise beschleunigungsabhängige Schaltprogramme eingesetzt, wie beispielsweise in den Druckschriften DE 195 16 948 A1 und DE 196 38 064 C2 beschrieben. Dabei werden die die Beschleunigung des Fahrzeuges charakterisierenden Größen und eine die Leistung der Antriebsmaschine charakterisierende Größe ständig ermittelt. Für einen Umschaltvorgang im Ausgangsgang sind ein Schaltdrehzahlbereich und ein Drehzahlbereich, welcher durch eine kleinste und eine größte erreichbare Drehzahl im Zielgang begrenzt ist, festlegbar. Der Schaltdrehzahlbereich wird wenigstens durch eine untere Schaltdrehzahl und eine obere Schaltdrehzahl und der Drehzahlbereich durch eine Zieldrehzahl sowie eine weitere Drehzahl begrenzt. Der Umschaltvorgang wird in Abhängigkeit von der ermittelten Beschleunigung eingeleitet. Die untere Zieldrehzahl wird bei einem Umschaltvorgang in einem ersten Grenzzustand - hohe Beschleunigung bei niedrigeren Antriebsdrehzahlen oder geringe Verzögerung bei niedrigen Antriebsdrehzahlen - bei Einleitung einer Umschaltung bei einer Vielzahl von Schaltdrehzahlen erreicht. Der Schaltvorgang zwischen dem ersten Grenzzustand und der größten erreichbaren Drehzahl im Zielgang wird in Abhängigkeit der ermittelten Größen im Schaltdrehzahlbereich im Ausgangsgang eingeleitet. Das aus der Druckschrift DE 196 38 064 C2 vorbekannte beschleunigungsabhängige Schaltprogramm ist dadurch charakterisiert, dass die Schaltkennlinien derart ausgelegt sind, dass diese für alle mögliche Achsübersetzungen, mit denen das Fahrzeuggetriebe gekoppelt werden kann, das gleiche Ergebnis erzielt wird. Der Nachteil derartiger beschleunigungsabhängiger Schaltprogramme besteht jedoch im Wesentlichen darin, dass eine Vielzahl von Parametern zu berücksichtigen ist, welche fortlaufend oder zumindest in gewissen Teilabständen ermittelt werden müssen. Dabei handelt es sich zum einen um den Fahrvorgang charakterisierende Größen, ferner jedoch auch um Größen, die vom Fahrzeug, der Fahrzeugbeladung selbst sowie auch der Umwelt, insbesondere der Topographie, abhängig sein können. Um hier immer optimale Schaltvorgänge beim Umschaltvorgang zwischen einem Ausgangsgang und einem Zielgang zu erreichen, ist es dabei erforderlich, diese Größen fortlaufend zu ermitteln und auszuwerten. Auch bei der Erstellung der den Schaltvorgängen zugrundeliegenden Schaltkennlinien wie zum Beispiel Druckvorgaben sind diese Parameter mit zu berücksichtigen. Ein weiterer Nachteil besteht darin, dass die Schaltkennlinien entweder selbstlernend oder über Berechnungen erstellt werden oder aber immer für eine bestimmte Konfiguration eines bestimmten Getriebetyps in einer Antriebsmaschine ausgelegt sind. Dies gilt für alle Umschaltvorgänge zwischen einem beliebigen Ausgangsgang und einem Zielgang, einschließlich der Umschaltung zwischen dem Wandlergang und dem mechanischen Gang, insbesondere der Zuschaltung einer Überbrückungskupplung. Gerade beim Übergang zwischen der rein hydrodynamischen Leistungsübertragung zur mechanischen Leistungsübertragung sind zusätzlich die durch den hydrodynamischen Kreislauf bedingten Gegebenheiten mit zu berücksichtigen. Dies gilt insbesondere beim Einsatz hydrodynamischer Drehzahl-/Drehmomentwandler, da diese nicht über ihren gesamten Betriebsbereich mit einem akzeptablen Wirkungsgrad arbeiten und ferner bei hydrodynamischen Kupplungen durch den systembedingten Schlupf.

Das Dokument FR 2 701 301 A offenbart eine Lock-up-Steuerung, wobei der Stator fest montiert ist und die Überbrückungskupplung bei einem Drehmomentverhältnis von 1 angelegt wird. Die in diesem Dokument, das als nächstliegender Stand der Technik angesehen werden kann, offenbarten Merkmale, sind im Oberbegriff von Anspruch 1 zusammengefasst.

Zum weiteren Stand der Technik wird auf die folgenden Dokumente verwiesen:

> US 6 454 676 B1
> EP 1 498 297 A
> US 5 637 052 A
> JANDASEK, V.J.: "Design Practices Passenger Car Automatic Transmissions" 1973, SOCIETY OF AUTOMOTIVE ENGINEERS, WARRENDALE, XP002366173

Der Erfindung liegt daher die Aufgabe zugrunde, ein Verfahren zur Steuerung des Wechsels zwischen den hydrodynamischen und mechanischen Gangstufen in einem Fahrzeuggetriebe, umfassend eine hydrodynamische Komponente, vorzugsweise in Form eines hydrodynamischen Drehzahl-/Drehmomentwandlers, welcher direkt oder in innerer oder in äußerer Leistungsverzweigung mit einem mechanischen Getriebeteil zusammen arbeitet, wobei die Leistungsübertragung sowohl über den hydrodynamischen Getriebeteil als auch den mechanischen Getriebeteil erfolgt oder aber unter Umgehung des hydrodynamischen Getriebeteils durch Zuschaltung einer so genannten Überbrückungskupplung dahingehend zu vereinfachen, dass die Anzahl der erforderlichen zu erfassenden Ist-Werte, welche den aktuellen Fahrzustand, den Fahrerwunsch sowie die fahrzeugabhängigen und fahrzeugunabhängigen Parameter charakterisieren, auf ein Minimum reduziert wird. Ferner wird das Verfahren für eine Vielzahl unterschiedlicher Fahrzeuggetriebe zum Einsatz gelangen, wobei das Verfahren ohne erhebliche Modifikationen für unterschiedlich ausgelegte Getriebe und unterschiedlich ausgelegte Kombinationen zwischen einer Antriebsmaschine und einem derartigen Getriebe verwendbar sein soll. Der steuerungstechnische Aufwand ist so gering wie möglich zu halten.

Die erfindungsgemäße Lösung ist durch die Merkmale des Anspruchs 1 charakterisiert. Vorteilhafte Ausgestaltungen sind in den Unteransprüchen wiedergegeben.

Ein Getriebe für den Einsatz als Fahrzeuggetriebe in Antriebssträngen für Fahrzeuge, umfassend mindestens einen Getriebeeingang und einen Getriebeausgang, wobei zwischen diesen ein hydrodynamischer Getriebeteil und ein mechanischer Getriebeteil angeordnet sind und die Leistungsübertragung zum einen rein hydrodynamisch, hydrodynamisch-mechanisch oder rein mechanisch erfolgen kann, umfasst eine schaltbare Kupplung, die dem hydrodynamischen Getriebeteil, insbesondere der hydrodynamischen Komponente in Form eines Drehzahl-/Drehmomentwandlers oder einer hydrodynamischen Kupplung zugeordnet ist, zur Umgehung oder Überbrückung der hydrodynamischen Übertragungselemente. Erfindungsgemäß ist das Verfahren zur Steuerung des Wechsels zwischen der hydrodynamischen zur rein mechanischen Leistungsübertragung, insbesondere der Überbrückung des hydrodynamischen Leistungszweiges, dadurch charakterisiert, dass die Auslösung des Schaltvorganges bei Vorliegen eines Drehzahlverhältnisses von $\nu \geq \nu_{Grenz}$ erfolgt, wobei $\nu_{Grenz}$ ein Grenzdrehzahlverhältnis bestimmt.

$$\nu_{Grenz} = \frac{n_T}{n_P}$$

mit
$n_P$ = Drehzahl des Primärrades und
$n_T$ = Drehzahl des Sekundärrades

Dabei wird unter dem Grenzdrehzahlverhältnis $\nu_{Grenz}$ das Drehzahlverhältnis in einem Betriebspunkt im Kennfeld der hydrodynamischen Komponente verstanden, bei dem eine $\eta$-Änderung in Richtung eines Abfalls erfolgt. Dieser ist von der hydrodynamischen Komponente abhängig. Vorzugsweise wird ein Grenzdrehzahlverhältnis von $\geq 0,75$ vorliegen.
Damit wird sichergestellt, dass die Deaktivierung der hydrodynamischen Leistungsübertragung und Aktivierung der rein mechanischen Leistungsübertragung bei einer fest vorgegebenen Wandlung vorzugsweise von $\mu = 1$ oder einem Drehzahlverhältnis zwischen dem Sekundärrad und dem Primärrad. Die Auslösung des Schaltvorganges erfolgt dabei lediglich in Abhängigkeit zweier zu ermittelnder Drehzahlen $n_P$ und $n_T$ bzw. der diese wenigstens mittelbar charakterisierenden Größen. Weitere Kriterien sind nicht erforderlich. Der Arbeitspunkt stellt sich dann automatisch ein. Eine Berücksichtigung des Lastzustandes ist ebenfalls nicht erforderlich. Damit wird der steuerungstechnische Aufwand minimal gehalten, insbesondere werden ohnehin ermittelte Größen zur Ansteuerung der schaltbaren Kupplung in Form der Überbrückungskupplung und des hydrodynamischen Drehzahl-/Drehmomentwandlers verwendet.

Als die, die Drehzahl $n_P$ des Primärrades des hydrodynamischen Drehzahl-/Drehmomentwandlers wenigstens mittelbar charakterisierenden Größen können neben der direkten Erfassung der Drehzahl des Primärrads $n_P$ die Drehzahlen $n_{AM}$ der mit dem Getriebeeingang gekoppelten Antriebsmaschine oder $n_E$ am Getriebeeingang angesehen werden. Andere im direkten funktionalen Zusammenhang zur Drehzahl des Primärrades $n_P$ stehende Größen sind ebenfalls denkbar. Dies gilt in Analogie auch für die Drehzahl des Sekundärrades $n_T$. Diese kann entweder direkt ermittelt werden, beispielsweise durch Anordnung einer entsprechenden Erfassungseinrichtung am Sekundärrad oder aber in Abhängigkeit der Übersetzung aus der Drehzahl am Getriebeausgang, der Fahrgeschwindigkeit v, einer beliebigen Drehzahl im Getriebe n oder aber einer anderen Größe, die ebenfalls im funktionalen Zusammenhang zur Drehzahl des Sekundärrades steht, ermittelt werden. In der Regel werden zumindest die Drehzahl der Antriebsmaschine $n_{AM}$ sowie die Drehzahl entweder am Getriebeeingang $n_E$ oder am Getriebeausgang $n_A$ ohnehin für andere Steuerungsaufgaben ermittelt und beispielsweise in einer zentralen Fahrsteuerung oder auf dem Fahrzeug-CAN-Bus abgelegt. Diese können dann in einfacher Weise für das erfindungsgemäße Verfahren herangezogen werden.

Gemäß einer Weiterentwicklung ist es vorgesehen, neben dem Drehzahlverhältnis zusätzlich eine weitere Größe als Schaltauslösekriterium zu berücksichtigen, um eine unerwünscht große Drückung der Antriebsmaschine, insbesondere bei Hochschaltvorgängen zu vermeiden. Als dieses kann beispielsweise die Abtriebsdrehzahl $n_T$, d. h. die Drehzahl am Sekundärrad oder aber am Getriebeausgang $n_A$ angesehen werden. Andere Kriterien sind ebenfalls denkbar.

Erfindungsgemäß wird zusätzlich die Antriebsmaschine angesteuert und die Drehzahl der Antriebsmaschine und damit die Drehzahl am Primärrad entsprechend angepasst. Somit kann bei Synchronität auch eine synchron schaltbare Kupplung, beispielsweise in Form einer Klauenkupplung zum Einsatz gelangen.

Die erfindungsgemäße Lösung wird nachfolgend anhand von Figuren erläutert. Darin ist im Einzelnen folgendes dargestellt:

Figur 1 verdeutlicht in schematisch vereinfachter Darstellung ein Antriebssystem, bei welchem das erfindungsgemäße Verfahren zum Einsatz gelangt;

Figuren 2a, 2b verdeutlichen anhand von Signalflussbildern den Ablauf eines Umschaltvorganges zwischen zwei hydrodynamischen Gangstufen;

Figur 3 verdeutlicht eine weiter Möglichkeit des Ablaufs eines Umschaltvorganges zwischen zwei hydrodynamischen Gangstufen;

Figur 4 verdeutlicht anhand einer Tabelle beispielhaft weiter Auslösekriterien;

Figur 5 verdeutlicht anhand eines Diagrammes die Spreizung der Motordrehzahl;

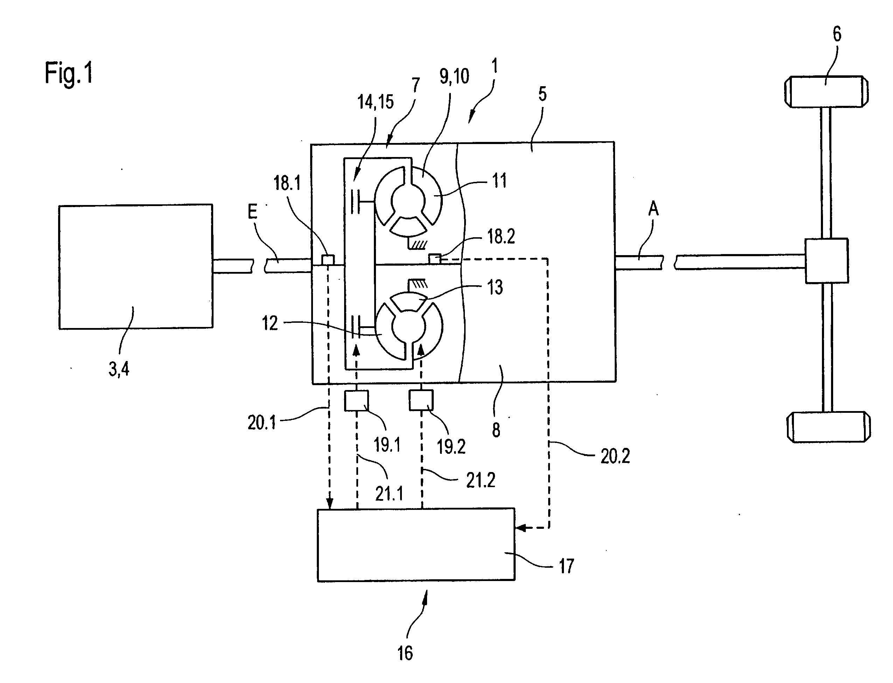

Die Figur 1 verdeutlicht in schematisch vereinfachter Darstellung den Grundaufbau eines Antriebssystems 1 für den Einsatz in Fahrzeugen 2, bei welchen das erfindungsgemäße Verfahren zum Wechsel zwischen der hydrodynamischen und den mechanischen Gangstufen zum Einsatz gelangt. Das Antriebssystem 1 umfasst eine Antriebsmaschine 3, die in der Regel als Verbrennungskraftmaschine 4 ausgeführt ist und über eine Getriebebaueinheit 5 mit den anzutreibenden Rädern 6 wenigstens mittelbar, d. h. über weitere Übertragungselemente verbunden ist. Die Getriebebaueinheit 5 umfasst einen ersten hydrodynamischen Getriebeteil 7 und einen zweiten mechanischen Getriebeteil 8. Der hydrodynamische Getriebeteil 7 umfasst eine hydrodynamische Komponente 9, welche vorzugsweise als hydrodynamischer Drehzahl-/Drehmomentwandler oder als hydrodynamische Kupplung 8 ausgeführt ist. Bei dem Drehzahl-/Drehmomentwandler 10 handelt es sich dabei um eine hydrodynamische Komponente, welche neben einem Primärrad 11 und einem Sekundärrad 12 baulich noch ein Leitrad 13 umfasst und bei welchem eine Änderung der Drehzahl auch immer eine Änderung des Momentes zur Folge hat. Bei einer hydrodynamischen Kupplung handelt es sich um eine Drehzahlwandlungseinheit. Der mechanische Getriebeteil 8 kann unterschiedlich ausgeführt sein, im einfachsten Fall beinhaltet dieser lediglich eine Übersetzungsstufe, vorzugsweise sind eine Mehrzahl von einzelnen, unterschiedlichen Gangstufen charakterisierenden Drehzahl-/Drehmomentwandlungseinheiten vorgesehen. Diese können im einfachsten Fall als Stirnradstufen oder aber in Form von Planetenradsätzen vorliegen, wobei der Wechsel zwischen den einzelnen Gangstufen dann durch die entsprechende Zuordnung einzelner Schaltelemente zu den einzelnen Elementen der Drehzahl-/Drehmomentwandlungseinheiten erfolgt und diese jeweils durch die Aktivierung der kommenden und die Deaktivierung der gehenden Gangstufe realisiert werden. Bezüglich der Ausgestaltung sind daher keinerlei Beschränkungen vorgesehen. Diesbezüglich wird daher auf die konkreten Möglichkeiten nicht näher eingegangen.

Die Leistungsübertragung zwischen dem Eingang E der Getriebebaueinheit und dem Ausgang A erfolgt dabei entweder lediglich über den hydrodynamischen Getriebeteil 7 und den diesem nachgeschalteten mechanischen Getriebeteil 8 oder aber lediglich rein über den mechanischen Getriebeteil 8 unter Umgehung des hydrodynamischen Getriebeteils 7, was über eine schaltbare Kupplung 14 realisiert wird, die auch als so genannte Überbrückungskupplung 15 bezeichnet werden kann.

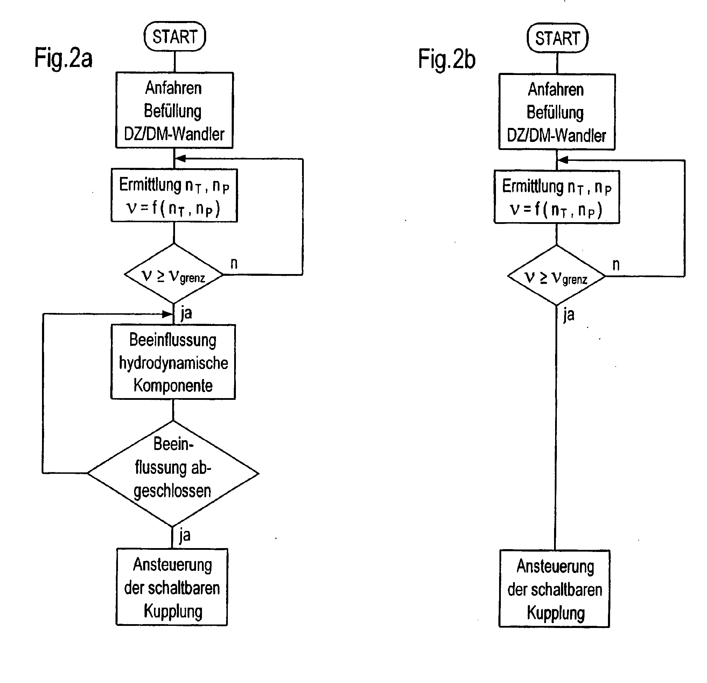

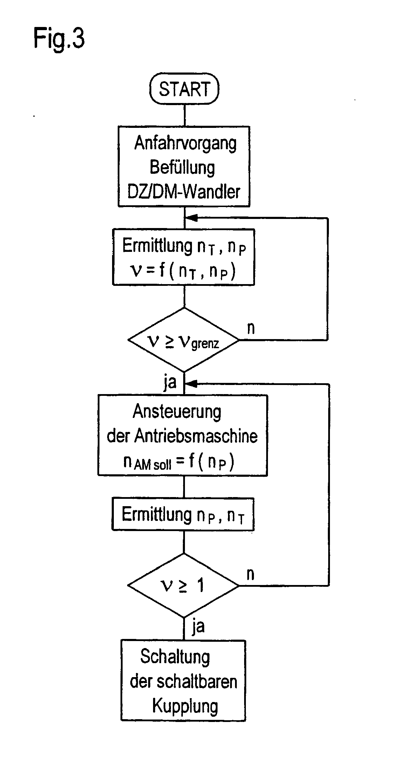

Erfindungsgemäß handelt es sich um eine synchron schaltbare Kupplung. Dies setzt voraus, dass der hydrodynamische Kreislauf, insbesondere der Drehzahl-/Drehmomentwandler 10 oder bei Ausführung als Kupplung, hinsichtlich der Leistungsübertragung beispielsweise in diesem Fall deaktiviert wird und ferner zur Synchronisation der miteinander zu koppelnden Elemente eine Ansteuerung der Antriebsmaschine 3 erforderlich ist. Die beiden Lösungsansätze werden dabei anhand von Signalflussbildern in den Figuren 2 und 3 erläutert.

Gemäß dem ersten besonders vorteilhaften Lösungsansatz erfolgt nach dem Start des Fahrzeuges der so genannte Anfahrvorgang, welcher über die hydrodynamische Komponente, insbesondere den hydrodynamischen Drehzahl-/Drehmomentwandler 10, realisiert wird. Die Überbrückungskupplung 15 ist in diesem Fall geöffnet und der hydrodynamische Drehzahl-/Drehmomentwandler 10 oder die hydrodynamische Kupplung aktiviert, d. h. das hydrodynamische Übertragungselement wird befüllt. Die Leistung wird dann über den hydrodynamischen Drehzahl-/Drehmomentwandler 10 oder die hydrodynamische Kupplung und den diesem nachgeschalteten mechanischen Getriebeteil zum Ausgang A der Getriebebaueinheit übertragen. Um für alle unterschiedlichen Getriebe 5 und unterschiedlichen Drehzahl-/Drehmomentwandler 10 oder hydrodynamischen Kupplungen einen Umschaltvorgang zur rein mechanischen Leistungsübertragung durch Überbrückung des hydrodynamischen Drehzahl-/Drehmomentwandlers 10 oder hydrodynamischen Kupplung auf einfache Art und Weise zu gewährleisten, werden die das Drehzahlverhältnis $v = \dfrac{n_T}{n_P}$ wenigstens mittelbar charakterisierenden Größen fortlaufend ermittelt und bei Einstellung eines Grenzdrehzahlverhältnisses von $v_{Grenz} = \dfrac{n_T}{n_P}$ die schaltbare Kupplung 14 aktiviert. Dieses Grenzdrehzahlverhältnis ist im $\eta/v$ Kennfeld durch einen Betriebspunkt definiert, der durch den Abfall einen

des $\eta$ charakterisiert ist oder der im Bereich dieser $\eta$-Änderung liegt, d. h. hinter dem Betriebspunkt , der die Änderung, insbesondere den Abfall einleitet. Dieses Grenzdrehzahlverhältnis liegt dabei vorzugsweise bei $\nu_{Grenz} \geq 0{,}75$. Dies erfolgt durch Erzeugung einer entsprechenden Anpresskraft F auf die miteinander in Wirkverbindung bringbaren Elemente. Dabei ist es nicht zwingend erforderlich, dass der hydrodynamische Drehzahl-/Drehmomentwandler 10 entleert wird. Die Ankopplung des Sekundärrades 12 an das Primärrad 10 bzw. die jeweils drehfest mit diesen verbundenen Elemente erfolgt dann in Abhängigkeit der Betätigungskraft der Überbrückungskupplung 15. Vorzugsweise kann jedoch vor der Betätigung der schaltbaren Kupplung der hydrodynamische Kreislauf beeinflusst, d. h. entleert oder zumindest gestört werden, so dass keine Leistungsübertragung mehr erfolgt. Die Entleerung bei hydrodynamischer Kupplung oder die Änderung des Wandlerdruckers bei hydrodynamischen Drehzahl-/Drehmomentwandlern 10 kann dabei wie bereits ausgeführt wie in der Figur 2a zeitlich vor der Aktivierung der schaltbaren Kupplung 14 erfolgen oder zeitlich überschneidend erfolgen. Die konkrete Auswahl der Vorgehensweise liegt jedoch im Ermessen des zuständigen Fachmannes und hängt von den Erfordernissen des Einsatzfalles ab. Auch ist eine Beeinflussung der hydrodynamischen Komponente nicht zwingend erforderlich, wie in der Figur 2b wiedergegeben.

Bei einer Ausführung mit Beeinflussung der hydrodynamischen Komponente ist es abweichend von der vorliegenden Erfindung denkbar, bei Ausbildung der schaltbaren Kupplung als reibschlüssige bzw. mit Schlupf arbeitende Kupplung die sich ergebende Drehzahldifferenz zwischen dem Primärrad und dem Sekundärrad allein durch die schaltbare Kupplung 14 zu überbrücken. Gemäß einer erfindungsgemäßen Ausführung ist jedoch vorgesehen, für die Ausführung gemäß der Figur 2a, d. h. auch bei Zusammenbruch des hydrodynamischen Kreislaufes, das Primärrad 11 hinsichtlich seiner Drehzahl $n_P$ an die Drehzahl am Sekundärrad $n_T$ anzupassen. Die Drehzahl $n_T$ am Sekundärrad 12 hängt dabei jedoch von den Gegebenheiten im Antriebsstrang bis zu den anzutreibenden Rädern ab. Handelt es sich um einen Hochschaltvorgang, d. h. ein Wechsel der Gangstufe in eine höhere Gangstufe, hat dies in der Regel eine Drückung der Antriebsdrehzahl zur Folge. Um Synchronität zu erzielen, ist erfindungsgemäß dann vorgesehen, die Drehzahl der Antriebsmaschine $n_{AM}$ in Abhängigkeit der zu überbrückenden Drehzahldifferenz zwischen dem Sekundärrad 12 und dem Primärrad 11 zu reduzieren. Somit wird der Schlupf nicht über die schaltbare Kupplung 14 ausgeglichen, sondern die Aktivierung dieser erfolgt erst bei nahezu Drehzahlgleichheit zwischen dem Primärrad $n_P$ und dem Sekundärrad $n_T$ bzw. der mit diesen drehfest direkt gekoppelten Elemente. Die schaltbare Kupplung 14 kann erfindungsgemäß als synchron schaltbare Kupplung ausgebildet werden. Dies ist beispielhaft in Figur 3 wiedergegeben, wobei hier bei Erreichen des Drehzahlverhältnisses von $\nu_{Grenz}$, beispielsweise $\nu_{Grenz} \geq 0{,}75$ die Stelleinrichtung des hydrodynamischen Drehzahl-/Drehmomentwandlers 10 oder der Kupplung angesteuert wird und die Leistungsübertragung, beispielsweise durch Änderung der Druckeinstellungen am Ein- und/oder Auslass aus dem hydrodynamischen Kreislauf und/oder eine Reduzierung des Füllungsgrades, unterbrochen wird. Ferner wird die Stelleinrichtung der Antriebsmaschine 3 angesteuert und die Drehzahl reduziert, so dass in Abhängigkeit des funktionalen Zusammenhanges zwischen $n_{AM}$ und $n_P$, der durch die zwischengeschalteten Übertragungselemente in der Verbindung zwischen Antriebsmaschine 3 und Getriebebaueinheit 5 gegeben ist, die Drehzahl $n_{AM}$ in entsprechender Weise reduziert wird, so dass die Drehzahl am Primärrad 11 $n_P$ der Drehzahl am Sekundärrad 12 angeglichen wird. Erst bei Synchronität erfolgt die Betätigung der schaltbaren Kupplung 14, d. h. erst mit Erreichen eines Drehzahlverhältnisses von $\nu = 1$ wird die schaltbare Kupplung 14 aktiviert.

Zur Realisierung dieser Steuerungsaufgaben ist eine Steuer- und/oder Regelvorrichtung 16 vorgesehen. Diese umfasst wenigstens eine Steuer- und/oder Regeleinrichtung 17, wobei es sich bei der Steuer- und/oder Regeleinrichtung 17 im einfachsten Fall um ein Steuergerät handelt, d. h. eine bauliche Konzentration der zu realisierenden Steuerungsfunktionen erforderlichen Komponenten oder aber nach Art eines virtuellen Steuergerätes durch die räumliche Trennung der Einzelkomponenten charakterisiert ist. Die Steuer- und/oder Regelvorrichtung 16 ist dabei durch die Gesamtheit von Steuereinrichtung 17, Einrichtungen 18 zur wenigstens mittelbaren Erfassung von bestimmten zu verarbeitenden Größen und Stelleinrichtungen 19 sowie den entsprechenden Verbindungen 20 und 21 zur Steuereinrichtung 17 charakterisiert. Zur Realisierung der erfindungsgemäßen Lösung ist es zumindest erforderlich, in der Steuereinrichtung 17 die das Drehzahlverhältnis $\nu$ wenigstens mittelbar charakterisierenden Größen zu verarbeiten. Das Drehzahlverhältnis $\nu$, welches durch die Drehzahl $n_T$ des Sekundärrades 12 und $n_P$ des Primärrades 11 charakterisiert ist, kann dabei direkt ermittelt werden, beispielsweise über entsprechende Erfassungseinrichtungen 18.1 und 18.2, wobei diese direkt dem Primärrad 11 und dem Sekundärrad 12 zugeordnet sind. Andere Ausführungen bestehen in der wenigstens indirekten Ermittlung. Dabei können funktionale Zusammenhänge genutzt werden, beispielsweise zwischen der Drehzahl am Getriebeeingang E und dem Primärrad $n_P$ bzw. der Drehzahl der Antriebsmaschine $n_{AM}$ und der Drehzahl des Primärrades $n_P$. Dies gilt in Analogie auch für die Ermittlung der Drehzahl $n_T$ am Sekundärrad 12. Diese kann beispielsweise aus der aktuellen Fahrgeschwindigkeit $\nu_{ist}$ unter Berücksichtigung der entsprechenden Übersetzungen in der Verbindung zwischen den einzelnen Rädern 6 und dem Sekundärrad 12 ermittelt werden. Neben der wenigstens indirekten Ermittlung der Drehzahl $n_P$ und $n_T$ aus entsprechenden im funktionalen Zusammenhang mit diesen stehenden Drehzahlen können diese Größen jedoch auch durch die funktionalen Zusammenhänge zwischen diesen und anderen, nicht Drehzahlen beschreibenden Größen gebildet werden. So ist es beispielsweise denkbar, auch Momente zu erfassen und aus diesen die Drehzahlen abzuleiten. Entscheidend ist, dass der Umschaltvorgang jedoch dabei bei einem festen Betriebspunkt von stattfindet, d. h. bei definiertem Momentenverhältnis zwischen dem vom Primärrad 11 abgegebenem und vom Sekundärrad 12 aufgenommenen Moment $M_P$ und $M_T$. Damit ist es unabhängig vom Getriebetyp, den aktuellen, den Fahrzustand beschreibenden Parametern sowie den fahrzeugunabhängigen Größen möglich, immer eine Schaltung der Überbrückungskupplung bei einem fest definierten Schlupf zwischen dem Primärrad 11 und dem Sekundärrad 12 vorzunehmen, der durch unterschiedliche Drehzahlen dieser charakterisiert ist. Lediglich durch das Vorliegen dieses Schlupfwertes, der durch ein bestimmtes festes Drehzahlverhältnis charakterisiert wird, wird die Schaltung ausgelöst. Der Schaltpunkt, d. h. die Zieldrehzahl, wird zusätzlich durch entsprechende Reduzierung der Drehzahl der Antriebsmaschine beschleunigter eingestellt.

Zur Gewährleistung optimaler Schaltvorgänge unter unterschiedlichsten Randbedingungen wird vorzugsweise ein weiteres Kriterium zur Realisierung bzw. Einleitung des Schaltvorganges herangezogen. Dies bedeutet, dass neben dem Drehzahlverhältnis von $\nu \geq \nu_{Grenz}$ auch noch weitere Kriterien vorliegen müssen, beispielsweise eine Grenzdrehzahl an der Antriebsmaschine oder eine bestimmte Fahrgeschwindigkeit. Damit wird es möglich, den Zeitpunkt der Auslösung des Schaltvorganges, d. h. des Wechsels zwischen der hydrodynamischen und der mechanischen Leistungsübertragung noch weiter zu präzisieren. Ein wesentliches Anwendungsgebiet dieser Weiterentwicklung sind Nulllasthochdruckschaltungen. Mit der Einleitung erst bei Vorliegen der Zusatzkriterien wird eine vernünftige Anschlussdrehzahl erzielt.

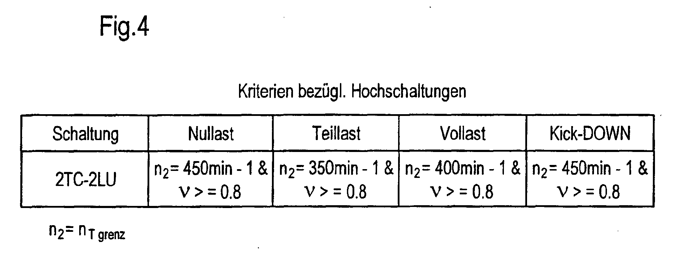

Die Figur 4 verdeutlicht dabei beispielhaft anhand einer Tabelle unterschiedliche Lastzustände und die erforderlichen Kriterien für eine Hochschaltung. Daraus ist ersichtlich, dass der Wechsel zwischen der hydrodynamischen zur mechanischen Leistungsübertragung bei Nulllast beispielsweise bei einer Drehzahl von $n_2 = 450$ U/min und $n_2$ = Abtriebsdrehzahl am Getriebe und einem Drehzahlverhältnis von $\nu \geq 0,8$ erfolgen soll. Bei Teillast wird der Schaltvorgang bei $n_2 = 350$ U/min und ebenfalls einem vorliegenden Drehzahlverhältnis von $\geq 0,8$ eingeleitet. Die dargestellten Kriterien sind Beispiele.

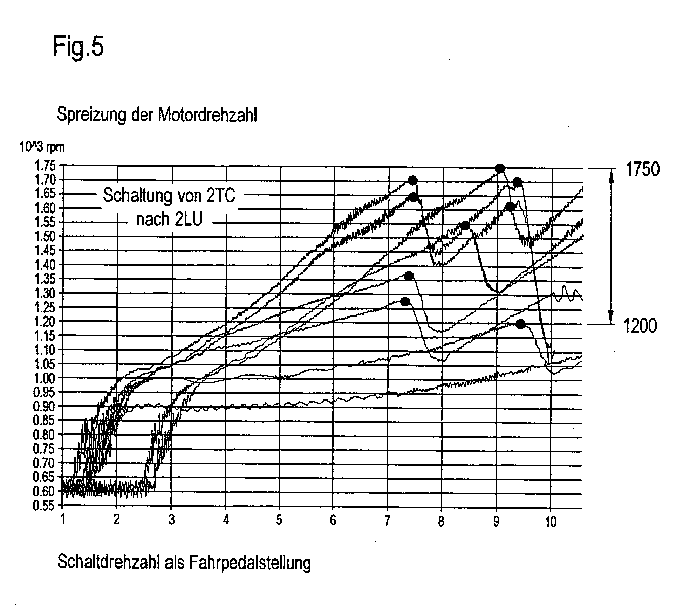

Die Figur 5 verdeutlicht die Einleitung des Umschaltvorgang bei unterschiedlichen Drehzahlen der Antriebsmaschine. Daher wird in Abhängigkeit der Fahrpedalstellung und damit eines Wunsches nach Änderung eines Fahrzustandes der Schaltvorgang bei unterschiedlichen Drehzahlen der Antriebsmaschine eingeleitet. Die Bandbreite bewegt sich dabei beispielhaft zwischen 1200 und 1750 Drehzahlen der Antriebsmaschine von $n_1 = 1200$ und $n_1 = 1750$ U/min.

Bezugszeichenliste

| 1 | Antriebssystem |
|---|---|
| 2 | Fahrzeug |
| 3 | Antriebsmaschine |
| 4 | Verbrennungskraftmaschine |
| 5 | Getriebebaueinheit |
| 6 | Räder |
| 7 | erster hydrodynamischer Getriebeteil |
| 8 | mechanischer Getriebeteil |
| 9 | hydrodynamische Komponente |
| 10 | hydrodynamischer Drehzahl-/Drehmomentwandler |
| 11 | Primärrad |
| 12 | Sekundärrad |
| 13 | Leitrad |
| 14 | schaltbare Kupplung |
| 15 | Überbrückungskupplung |
| 16 | Steuer- und/oder Regelvorrichtung |
| 17 | Steuer- und/oder Regeleinrichtung |
| 18 | Erfassungseinrichtung |
| 19 | Stelleinrichtung |
| 20 | Verbindung |
| 21 | Verbindung |
| E | Getriebeeingang |
| A | Getriebeausgang |
| $n_P$ | Drehzahl des Primärrades |
| $n_T$ | Drehzahl des Sekundärrades |
| $n_{AM}$ | Drehzahl der Antriebsmaschine |
| $\nu$ | Drehzahlverhältnis |
| $\mu$ | Wandlung |
| $\eta$ | Wirkungsgrad |

**Patentansprüche**

1. Verfahren zur Steuerung eines Getriebes (5) in einem Antriebsstrang (1) eines Fahrzeuges (2), wobei das Getriebe (5) umfasst:

   - mindestens einen Eingang (E) und mindestens einen Ausgang,
   - einen hydrodynamischen Getriebeteil (7) mit mindestens einem hydrodynamischen Drehzahl-/Drehmomentwandler (10) oder einer hydrodynamischer Kupplung; umfassend mindestens ein Primärrad (11) und ein Sekundärrad (12);
   - einen mechanischen Getriebeteil (8), wobei der hydrodynamische Getriebeteil mit dem mechanischen Getriebeteil (8) in Reihe geschaltet ist und

- eine schaltbare Kupplung (14) zur Überbrükkung des hydrodynamischen Getriebeteils;

1.1 bei welchem wenigstens ein Teil des Anfahrvorganges durch die Leistungsübertragung über den hydrodynamischen Getriebeteil charakterisiert ist,

1.2 bei welchem während des Anfahrvorganges bei Vorgabe eines Fahrerwunsches und/oder Vorliegen eines Signals nach Einstellung oder Änderung eines Fahrzustandes ein Schaltvorgang eingeleitet wird, der durch Wechsel zwischen der hydrodynamischen und mechanischen Leistungsübertragung durch Überbrükkung des hydrodynamischen Getriebeteil (7) durch die schaltbare Kupplung (14) charakterisiert ist;

1.3 bei welchem der Schaltvorgang bei Vorliegen eines Drehzahlverhältnisses von $\nu = \nu_{Grenz}$ erfolgt, mit $\nu_{Grenz}$ = Grenzdrehzahlverhältnis

und $\nu_{Grenz} = \dfrac{n_T}{n_P}$

mit $n_P$ = Drehzahl des Primärrades und

$n_T$ = Drehzahl des Sekundärrades

wobei $\nu_{Grenz}$ im $\eta/\nu$-Diagramm der hydrodynamischen Komponente den Betriebspunkt beschreibt, bei dem eine Änderung des $\eta$-Verlaufs in Richtung eines Abfalls erfolgt;

**dadurch gekennzeichnet, dass** als schaltbare Kupplung (14) eine synchron schaltbare Kupplung eingesetzt wird, wobei vor dem Schließen ein Anpassen der Drehzahl ($n_P$)des Primärrades (11) an die Drehzahl ($n_T$) des Sekundärrades (12) durch Ansteuerung der mit dem Getriebeeingang (E) koppelbaren Antriebsmaschine (3) erfolgt.

2. Verfahren nach Anspruch 1, **dadurch gekennzeichnet, dass** die Drehzahlen ($n_P$, $n_T$) von Primärrad (11) und Sekundärrad (12) und das sich daraus ergebende Drehzahlverhältnis $\nu$ fortlaufend ermittelt werden.

3. Verfahren nach Anspruch 2, **dadurch gekennzeichnet, dass** die Drehzahlen ($n_P$, $n_T$) von Primärrad (11) und Sekundärrad (12) direkt erfasst werden oder aus den, die Drehzahlen von Primärrad (11) und Sekundärrad (12) wenigstens mittelbar charakterisierenden Größen ermittelt werden.

4. Verfahren nach Anspruch 3, **dadurch gekennzeichnet, dass** als die die Drehzahl des Primärrades wenigstens mittelbar charakterisierende Größe wenigstens eine der nachfolgend genannten bestimmt wird:

- die Drehzahl am Getriebeeingang
- die Drehzahl einer mit dem Getriebeeingang wenigstens mittelbar verbundenen Antriebsmaschine
- das Moment am Getriebeeingang
- das von einer mit dem Getriebeeingang verbindbaren Antriebsmaschine abgebare Moment.

5. Verfahren nach Anspruch 3, **dadurch gekennzeichnet, dass** als die die Drehzahl des Sekundärrades wenigstens mittelbar charakterisierende Größe wenigstens eine der nachfolgend genannten bestimmt wird:

- die Drehzahl am Getriebeausgang
- eine Drehzahl an beliebiger Stelle im Getriebe
- die Drehzahl am Getriebeeingang
- eine Drehzahl an beliebiger Stelle zwischen Getriebeausgang und den anzutreibenden Rädern des Fahrzeuges
- die Fahrgeschwindigkeit
- ein Moment an beliebiger Stelle zwischen Sekundärrad und den anzutreibenden Rädern.

6. Verfahren nach einem der Ansprüche 1 bis 5, **dadurch gekennzeichnet, dass** der Schaltvorgang in Abhängigkeit des Typs des Drehzahl-/Drehmomentwandlers oder der hydrodynamischen Kupplung genau bei dem fest vorgegeben Drehzahlverhältnis $\nu_{Grenz}$ zwischen Sekundärrad (12) und Primärrad (11) erfolgt.

7. Verfahren nach einem der Ansprüche 1 bis 6, **dadurch gekennzeichnet, dass** der Schaltvorgang erst bei Vorliegen wenigstens einer weiteren zusätzlichen Bedingung eingeleitet wird.

8. Verfahren nach Anspruch 7, **dadurch gekennzeichnet, dass** die weitere Bedingung durch wenigstens eine der nachfolgend genannten Bedingungen charakterisiert ist:

- das Vorliegen einer bestimmten vordefinierten Drehzahl am Sekundärrad (12) oder einem mit diesem wenigstens mittelbar verbundenen Element im Antriebsstrang (1) bestimmt ist;
- dem Vorliegen einer vordefinierten Fahrgeschwindigkeit.

9. Verfahren nach einem der Ansprüche 1 bis 8, **dadurch gekennzeichnet, dass** das Schließen der schaltbaren Kupplung (14) durch Ansteuerung der dieser zugeordneten Stelleinrichtung zeitgleich oder mit vordefiniertem zeitlichen Versatz zur Ermittlung des zur Auslösung bestimmten Drehzahlverhältnisses $\nu = \nu_{Grenz}$ erfolgt.

**10.** Verfahren nach einem der Ansprüche 1 bis 8, **dadurch gekennzeichnet, dass** der Schaltvorgang durch das Schließen der schaltbaren Kupplung (14) und eine Beeinflussung des Arbeitskreislaufes der hydrodynamischen Komponente die Unterbrechung des Arbeitskreislaufes oder die Änderung der Druckverhältnisse charakterisiert ist.

**11.** Verfahren nach Anspruch 10, **dadurch gekennzeichnet, dass** das Schließen der schaltbaren Kupplung (14) und die Beeinflussung der hydrodynamischen Komponente gleichzeitig eingeleitet wird.

**12.** Verfahren nach Anspruch 10, **dadurch gekennzeichnet, dass** das Schließen der schaltbaren Kupplung (14) und die Beeinflussung mit zeitlichem Versatz zueinander eingeleitet wird.

**13.** Verfahren nach einem der Ansprüche 1 bis 12, **dadurch gekennzeichnet, dass** das Grenzdrehzahlverhältnis $v_{Grenz} \geq 0,75$ beträgt.

**Claims**

**1.** Method for controlling a transmission system (5) in a drive train (1) of a vehicle (2), where the transmission system (5) comprises:

- at least one input (E) and one output,
- a hydrodynamic transmission element (7) with at least one hydrodynamic speed/torque converter (10) or a hydrodynamic clutch; comprising at least one primary wheel (11) and one secondary wheel (12);
- one mechanical transmission element (8), wherein the hydrodynamic transmission element is operated with the mechanical transmission element (8) in series and
- one clutch (14) to bridge the hydrodynamic transmission element;

1.1 where at least one part of the starting process is **characterized by** the transmission of power via the hydrodynamic transmission element,
1.2 where a gear change is initiated during the starting process following driver input and/or the presence of a signal after setting or changing the drive state, with said gear change **characterised by** alternating between the hydrodynamic and the mechanical power transmission by bridging the hydrodynamic transmission element (7) by means of the clutch (14);
1.3 where the gear change is effected when the speed ratio is

$v = v_{limit}$, with $v_{limit}$ = limit speed ratio and
$v_{limit} = n_T / n_p$

where $n_T$ = speed of the primary wheel
$n_p$ = speed of the secondary wheel

where $v_{limit}$ describes the working point in the $\eta/v$ diagram of the hydrodynamic components, in the case of which there is a change in the course of $\eta$ in the direction of a reduction:
wherein a synchronising clutch is employed as a clutch (14), where the speed $n_p$ of the primary wheel (11) is adjusted to match the speed of the secondary wheel (12) before closure by actuating the motor (3) connectable to the transmission input (E).

**2.** Method in accordance with Claim 1 wherein the speeds ($n_T$, $n_p$) of the primary wheel (11) and the secondary wheel (12) and the resulting speed ratio v are constantly being measured.

**3.** Method in accordance with Claim 2 wherein the speeds ($n_T$, $n_p$) of the primary wheel (11) and the secondary wheel (12) are measured directly or at least from the quantities indirectly characterising the speeds of the primary wheel (11) and the secondary wheel (12).

**4.** Method in accordance with Claim 3 wherein at least one of the following is specified as the quantity which at least indirectly characterises the speed of the primary wheel:

- the speed of the transmission input
- the speed of a motor connected at least indirectly with the transmission input
- the torque of the transmission input
- the torque delivered from a motor connectable to the transmission input.

**5.** Method in accordance with Claim 3 wherein at least one of the following is specified as the quantity which at least indirectly characterises the speed of the secondary wheel:

- the speed of the transmission output
- a speed at any point in the transmission
- the speed at the transmission input
- a speed at any point between the transmission output and the driven wheels of the vehicle
- the speed of vehicle travel
- a torque at any point between the secondary wheel and the driven wheels.

**6.** Method in accordance with any one of Claims 1 to 5 wherein the gear shift is effected at the fixed specified speed ratio $v_{limit}$ between the secondary wheel (12) and primary wheel (11), dependant upon the type of speed/torque converter or the hydrodynamic clutch.

**7.** Method in accordance with any one of Claims 1 to 6 wherein the gear shift is only initiated when at least another additional condition is fulfilled.

**8.** Method in accordance with Claim 7 wherein the additional condition is **characterised by** at least one of the following conditions:

- the existence of a particular predefined speed at the secondary wheel (12) or at an element connected at least indirectly to it in the drive train (1)
- the existence of a predefined speed of vehicle travel

**9.** Method in accordance with any one of Claims 1 to 8 wherein the clutch (14) is closed by activating the matching servomechanism simultaneously or with a predefined temporal delay to determine the speed ratio $v = v_{limit}$ specified for actuation.

**10.** Method in accordance with any one of Claims 1 to 8 wherein the gear shift is **characterised by** closing the clutch (14) and influencing the operating circuit of the hydrodynamic components, interrupting the operating circuit or modifying the pressure ratio.

**11.** Method in accordance with Claim 10 wherein closing the clutch (14) and influencing the hydrodynamic components is initiated simultaneously.

**12.** Method in accordance with Claim 10 wherein closing the clutch (14) and the effect is initiated with a temporal delay between the two.

**13.** Method in accordance with any one of Claims 1-12 wherein the limit speed ratio $v_{limit}$ is $\geq 0.75$.

**Revendications**

**1.** Procédé de commande d'une transmission (5) dans un groupe motopropulseur (1) d'un véhicule (2), la transmission (5) comprenant :

- au moins une entrée (E) et au moins une sortie,
- une partie de transmission hydrodynamique (7) avec au moins un convertisseur hydrodynamique vitesse/couple (10) ou avec un coupleur hydrodynamique ; comprenant au moins une roue primaire (11) et une roue secondaire (12) ;
- une partie de transmission mécanique (8), la partie de transmission hydrodynamique étant montée en série avec la partie de transmission mécanique (8) et
- un embrayage commutable (14) de pontage de la partie de transmission hydrodynamique ;
1.1 où au moins une partie de l'opération de démarrage est **caractérisée par** la transmission de puissance par la partie de transmission hydrodynamique,
1.2 où, pendant l'opération de démarrage, un passage de vitesses est amorcé lorsque le conducteur a émis ce souhait et/ou lorsqu'a été délivré un signal après réglage ou changement d'une condition de roulage, cette commutation étant **caractérisée par** le fait de passer de la transmission de puissance hydrodynamique à la transmission de puissance mécanique par pontage de la partie de transmission hydrodynamique (7) par l'embrayage commutable (14) ;
1.3 où le changement de vitesse se fait lorsqu'on a un rapport de vitesse de $v = v_{lim}$ où $v_{lim}$ = le

rapport de vitesse limite et où $\quad v_{\lim} = \dfrac{n_T}{n_P}$

avec $n_P$ = la vitesse de la roue primaire et
$n_T$ = la vitesse de la roue secondaire,
$v_{lim}$ décrivant dans le diagramme $\eta/v$ de la composante hydrodynamique le point de fonctionnement auquel la courbe $\eta$ change en direction d'une baisse ;

**caractérisé en ce que** l'on utilise comme embrayage commutable (14) un embrayage commutable en synchronisme, la vitesse ($n_P$) de la roue primaire (11) étant réglée sur la vitesse ($n_T$) de la roue secondaire (12) avant la fermeture par actionnement de la machine d'entraînement (3) apte à être couplée avec l'entrée de la transmission (E).

**2.** Procédé selon la revendication 1, **caractérisé en ce que** les vitesses ($n_P$, $n_T$) de la roue primaire (11) et de la roue secondaire (12) et le rapport de vitesses $v$ qui en résulte sont supputées en permanence.

**3.** Procédé selon la revendication 2, **caractérisé en ce que** les vitesses ($n_P$, $n_T$) de la roue primaire (11) et de la roue secondaire (12) sont saisies directement ou sont supputées à partir des grandeurs caractérisant du moins indirectement les vitesses de la roue primaire (11) et de la roue secondaire (12).

**4.** Procédé selon la revendication 3, **caractérisé en ce que** l'on détermine en tant que grandeur caractérisant du moins indirectement la vitesse de la roue primaire au moins une des grandeurs citées ci-dessous :

- la vitesse à l'entrée de la transmission
- la vitesse d'une machine d'entraînement reliée du moins indirectement à l'entrée de la transmission

- le couple à l'entrée de la transmission
- le couple apte à être délivré par une machine d'entraînement apte à être reliée à l'entrée de la transmission.

5. Procédé selon la revendication 3, **caractérisé en ce que** l'on détermine en tant que grandeur caractérisant du moins indirectement la vitesse de la roue secondaire au moins une des grandeurs citées ci-dessous :

- la vitesse à la sortie de la transmission
- une vitesse à un endroit quelconque de la transmission
- la vitesse à l'entrée de la transmission
- une vitesse à un endroit quelconque entre la sortie de la transmission et les roues du véhicule destinées à être menées
- la vitesse de déplacement du véhicule
- un couple à un endroit quelconque entre la roue secondaire et les roues destinées à être menées.

6. Procédé selon l'une quelconque des revendications 1 à 5, **caractérisé en ce que** l'opération de commutation se fait en fonction du type du convertisseur vitesse/couple ou du coupleur hydrodynamique au moment précis où le rapport des vitesses $v_{lim}$ entre la roue secondaire (12) et la roue primaire (11) que l'on a fixé est atteint.

7. Procédé selon l'une quelconque des revendications 1 à 6, **caractérisé en ce que** le passage de vitesse n'est amorcé que lorsqu'au moins une autre condition supplémentaire est remplie.

8. Procédé selon la revendication 7, **caractérisé en ce que** l'autre condition est **caractérisée par** au moins une des conditions mentionnées ci-dessous :

- une certaine vitesse prédéfinie à la roue secondaire (12) ou à un élément dans le groupe motopropulseur (1) du moins indirectement relié à celle-ci ;
- une vitesse de déplacement du véhicule prédéfinie.

9. Procédé selon l'une quelconque des revendications 1 à 8, **caractérisé en ce que** la fermeture de l'embrayage (14) commutable se fait par actionnement du mécanisme d'actionnement associé à celui-ci en même temps ou avec un décalage prédéfini dans le temps pour déterminer le rapport de vitesse $v = v_{lim}$ destiné à déclencher cette fermeture.

10. Procédé selon l'une quelconque des revendications 1 à 8, **caractérisé en ce que** le passage de vitesse est **caractérisée par** la fermeture de l'embrayage (14) commutable et par l'influence exercée sur le circuit de travail de la composante hydrodynamique, par l'interruption du circuit de travail ou le changement des rapports de pression.

11. Procédé selon la revendication 10, **caractérisé en ce que** la fermeture de l'embrayage (14) commutable et l'influence exercée sur la composante hydrodynamique sont amorcées en même temps.

12. Procédé selon la revendication 10, **caractérisé en ce que** la fermeture de l'embrayage (14) commutable et l'influence exercée sur la composante hydrodynamique sont amorcées avec un décalage dans le temps.

13. Procédé selon l'une quelconque des revendications 1 à 12, **caractérisé en ce que** le rapport de vitesses limite

Fig.1

Fig.2a

START

Anfahren
Befüllung
DZ/DM-Wandler

Ermittlung $n_T$, $n_P$
$v = f(n_T, n_P)$

$v \geq v_{grenz}$ — n

ja

Beeinflussung
hydrodynamische
Komponente

Beeinflussung abgeschlossen

ja

Ansteuerung
der schaltbaren
Kupplung

Fig.2b

START

Anfahren
Befüllung
DZ/DM-Wandler

Ermittlung $n_T$, $n_P$
$v = f(n_T, n_P)$

$v \geq v_{grenz}$ — n

ja

Ansteuerung
der schaltbaren
Kupplung

EP 1 841 989 B1

# Fig.3

```
                    ( START )
                        │
        ┌───────────────────────────────┐
        │        Anfahrvorgang          │
        │          Befüllung            │
        │        DZ/DM-Wandler          │
        └───────────────────────────────┘
                        │
        ┌───────────────────────────────┐
        │   Ermittlung $n_T$ , $n_P$    │◄──────┐
        │   $v = f( n_T , n_P )$        │       │
        └───────────────────────────────┘       │
                        │                        │
                       ╱ ╲          n            │
                      ╱   ╲─────────────────────┘
                      ╲   ╱
          $v \geq v_{grenz}$
                      ╲ ╱
                    ja │
        ┌───────────────────────────────┐
        │        Ansteuerung            │◄──────┐
        │    der Antriebsmaschine       │       │
        │   $n_{AM\,soll} = f( n_P )$   │       │
        └───────────────────────────────┘       │
                        │                        │
        ┌───────────────────────────────┐       │
        │   Ermittlung $n_P$ , $n_T$    │       │
        └───────────────────────────────┘       │
                        │                        │
                       ╱ ╲          n            │
                      ╱   ╲─────────────────────┘
                      ╲   ╱
              $v \geq 1$
                      ╲ ╱
                    ja │
        ┌───────────────────────────────┐
        │        Schaltung              │
        │     der schaltbaren           │
        │         Kupplung              │
        └───────────────────────────────┘
```

# Fig.4

Kriterien bezügl. Hochschaltungen

| Schaltung | Nullast | Teillast | Vollast | Kick-DOWN |
|---|---|---|---|---|
| 2TC-2LU | $n_2 = 450\text{min} - 1$ & $v > = 0.8$ | $n_2 = 350\text{min} - 1$ & $v > = 0.8$ | $n_2 = 400\text{min} - 1$ & $v > = 0.8$ | $n_2 = 450\text{min} - 1$ & $v > = 0.8$ |

$n_2 = n_{T\,grenz}$

## Fig.5

Spreizung der Motordrehzahl

Schaltdrehzahl als Fahrpedalstellung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19516948 A1, Druckschriften
- DE 19638064 C2
- FR 2701301 A
- US 6454676 B1
- EP 1498297 A
- US 5637052 A

**In der Beschreibung aufgeführte Nicht-Patentliteratur**

- **JANDASEK, V.J.** Design Practices Passenger Car Automatic Transmissions. *SOCIETY OF AUTOMO-TIVE ENGINEERS, WARRENDALE,* 1973